# EUROPÄISCHE PATENTSCHRIFT

(11) **EP 3 565 674 B1**
(45) Veröffentlichungstag und Bekanntmachung des Hinweises auf die Patenterteilung: **07.12.2022**
(21) Anmeldenummer: 18707013.1
(22) Anmeldetag: 21.02.2018
(51) Int. Cl.: B08B 1/00, B23Q 11/08, B23Q 17/00, B08B 13/00, B23Q 11/00, F16J 15/3296

(54) **ABSTREIFER ZUM ABSTREIFEN EINER OBERFLÄCHE EINER WERKZEUGMASCHINE MIT EINER VERSCHLEISSWARNEINRICHTUNG**
SCRAPER FOR SCRAPING A SURFACE OF A MACHINE TOOL HAVING A WEAR-INDICATING DEVICE
RACLOIR POUR RACLER UNE SURFACE D'UNE MACHINE-OUTIL, COMPRENANT UN DISPOSITIF DE SIGNALEMENT D'USURE

(30) Priorität: 21.02.2017 DE 102017103538
(43) Veröffentlichungstag der Anmeldung: 13.11.2019
(73) Patentinhaber: Thodacon Werkzeugmaschinenschutz GmbH, 83059 Kolbermoor (DE)
(72) Erfinder: VORPAHL, Vincent C., 85521 Ottobrunn (DE)
(74) Vertreter: Manitz Finsterwald Patent- und Rechtsanwaltspartnerschaft mbB
(86) Internationale Anmeldenummer: PCT/EP2018/054278
(87) Internationale Veröffentlichungsnummer: WO 2018/153916

(56) Entgegenhaltungen:
- EP-A2- 2 182 341
- WO-A1-2016/091561
- DE-A1-102011 082 574
- US-A- 3 429 356
- US-A- 4 937 633
- US-A1- 2003 230 466
- US-A1- 2012 267 858
- US-B1- 6 615 639

## Beschreibung

Die vorliegende Erfindung betrifft einen Abstreifer gemäß dem Oberbegriff des Anspruchs 1 zum Abstreifen einer Oberfläche einer Werkzeugmaschine.

Ein gattungsgemäßer Abstreifer geht der Art nach im Wesentlichen aus der US 2003 / 230 466 A1 hervor. Der Art nach im Wesentlichen vergleichbare Abstreifer gehen ferner aus den Druckschriften WO 2016 / 091 561 A1 und EP 2 182 341 A2 hervor.

Beispielsweise kommen bei modernen Werkzeugmaschinen Abstreifervorrichtungen zum Einsatz, um Kühl-/Schmiermittel von teleskopierbaren Abdeckungen oder Gliederschürzen der jeweiligen Maschine abzustreifen. Ebenfalls lassen sich mittels solcher Abstreifervorrichtungen, die hier auch als Abstreifer bezeichnet werden, beispielsweise die Führungsbahnen derartiger Werkzeugmaschinen von darauf abgelagerten Fremdkörpern, wie zum Beispiel bei der Bearbeitung von Metallen anfallenden Spänen, oder von sonstigem Schmutz befreien, um zu verhindern, dass die Führungsbahnen vorzeitig verschleißen. Da die Abstreiferlippe solch einer Abstreifervorrichtung unter Vorspannung an der Führungsbahn anliegt, unterliegt die Abstreiferlippe jedoch nicht unerheblichem Verschleiß und muss daher von Zeit zu Zeit ausgewechselt werden. Die Abstreiferlippen von derartigen Abstreifervorrichtungen können dabei eine komplexe Geometrie und insbesondere eine polygonale Berandung mit mehreren geraden Lippenabschnitten aufweisen, so dass es schwierig sein kann, den genauen Verschleißzustand der einzelnen Lippenabschnitten im Blick zu behalten.

Üblicherweise ist es daher erforderlich, derartige verschleißbehaftete Abstreiferlippen von Werkzeugmaschinenabstreifern, die üblicherweise aus einem Elastomermaterial gefertigt sind, regelmäßig hinsichtlich ihres Verschleißzustands zu überprüfen, um sie bei Bedarf austauschen zu können.

Da derartige Routineuntersuchungen insbesondere bei größeren Fertigungsanlagen sehr zeitaufwendig sind, wäre es daher im Sinne der Industrie 4.0 Revolution wünschenswert, einen Abstreifer für eine Werkzeugmaschine zu schaffen, der geeignet ist, einen Maschinenführer automatisch über den Verschleißzustand der Abstreiferlippe des Abstreifers zu informieren.

Der Erfindung liegt daher die Aufgabe zugrunde, diesem Bedarf gerecht zu werden.

Diese Aufgabe wird mit einem Abstreifer für eine Werkzeugmaschinemit den Merkmalen des Anspruchs 1 und insbesondere dadurch gelöst, dass die zumindest eine Signalleitung eine Flüssigkeitsleitung ist. Bei Erreichen der Verschleißgrenze wird die Flüssigkeitsleitung beschädigt, woraufhin eine in der Flüssigkeitsleitung befindliche Flüssigkeit aus derselben als ein für das Erreichen der Verschleißgrenze repräsentatives Signal austritt.

Handelt es sich hingegen beispielsweise bei der Signalleitung entgegen der Erfindung um einen elektrischen Leiter, an dem ein elektrisches Potential angelegt ist, so fließt aufgrund der Tatsache, dass die Signalleitung in die Abstreiferlippe eingebettet und somit isoliert ist, kein Strom durch die Signalleitung. Wird jedoch die Verschleißgrenze der Abstreiferlippe erreicht, was zur Folge hat, dass ein Abschnitt der Signalleitung freiliegt und somit in Kontakt mit einer leitenden Fläche wie beispielsweise einer abzustreifenden Führungsbahn einer Werkzeugmaschine gelangt, so fließt ein elektrischer Strom durch die Signalleitung, was ein deutliches Indiz dafür ist, dass die Abstreiferlippe ihre Verschleißgrenze wahrscheinlich erreicht hat.

Tritt ein solcher Signalstrom auf, so kann dieser einem Maschinenführer beispielsweise durch ein aufleuchtendes Lämpchen zur Kenntnis gebracht werden, so dass dieser den betreffenden Abstreifer bzw. dessen Abstreiferlippen gezielt auf Verschleiß überprüfen und bei Bedarf austauschen kann. Es ist somit nicht erforderlich, sämtliche Abstreifer der Maschinen einer Fertigungsanlage regelmäßig hinsichtlich ihres Verschleißzustands zu überprüfen, da das Erreichen der Verschleißgrenze dem Maschinenführer automatisch zur Kenntnis gebracht werden kann.

Gemäß einer nicht erfindungsgemäßen Ausführungsform kann es vorgesehen sein, dass die zumindest eine Signalleitung ein elektrischer Leiter eines elektrischen Stromkreises ist, der insbesondere von einer Batterie wie beispielsweise einer Knopfzelle, die vorzugsweise wiederaufladbar ist, mit elektrischer Energie gespeist wird. Der jeweilige Abstreifer verfügt also über seine eigene Spannungsquelle, so dass der Abstreifer nicht an eine externe Spannungsquelle angeschlossen werden muss. Eine Batterie als Spannungsquelle vorzusehen, kommt dabei insbesondere deshalb in Frage, da herkömmliche Abstreiferlippen in aller Regel schneller verschleißen, als es zu einer Entladung einer entsprechend geeigneten Batterie kommen kann. So wird erst dann Energie aus der Batterie entnommen, wenn die Verschleißgrenze der Abstreiferlippe erreicht ist, so dass die Batterie bis zu diesem Zeitpunkt abgesehen von geringfügigen Selbstentladungsvorgängen als zuverlässige Spannungsquelle zum Einsatz kommen kann.

Gemäß einer weiteren nicht erfindungsgemäßen Ausführungsform kann es vorgesehen sein, dass der Stromkreis ein Leuchtmittel wie beispielsweise eine LED enthält. Tritt in der zuvor erläuterten Art und Weise in der Signalleitung ein Signalstrom auf, wenn die Signalleitung freiliegt und beispielsweise mit einer Führungsbahn einer Werkzeugmaschine in leitenden Kontakt gelangt, so leuchtet das Leuchtmittel als Signal dafür auf, dass die Abstreiferlippe verschlissen ist, woraufhin unverzüglich ein Austausch der Abstreiferlippe erfolgen kann.

Gemäß einer weiteren nicht erfindungsgemäßen Ausführungsform kann das Leuchtmittel an der Abstreiferlippe oder in der unmittelbaren Umgebung derselben vorgesehen sein, wodurch einem Maschinenführer unmittelbar signalisiert werden kann, welcher Abstreifer einer Werkzeugmaschine verschlissen ist und ausgewechselt werden sollte. So sind nämlich an einer Werkzeugmaschine häufig mehrere Abstreifer vorgesehen, so dass der Maschinenführer durch eine in der unmittelbaren Umgebung des jeweiligen Abstreifers vorgesehene LED direkt darüber informiert werden kann, welcher Abstreifer konkret verschlissen ist und ausgewechselt werden sollte. Der Maschinenführer kann somit bereits aus der Ferne erkennen, bei welcher Maschine eine Verschleißwartung fällig ist und welcher Abstreifer konkret ausgetauscht werden sollte. Somit kann die Verschleißwarneinrichtung auch bei Maschinen eingesetzt werden, die über keine Schnittstelle zu einer entfernten Schaltzentrale verfügen.

Gemäß einer weiteren nicht erfindungsgemäßen Ausführungsform kann die Signalleitung zwei Leiterabschnitte umfassen, die jeweils derart in die Abstreiferlippe eingebettet sind, dass bei Erreichen der Verschleißgrenze der Abstreiferlippe zumindest ein Abschnitt jedes Leiterabschnitts freiliegt. Liegen also die beiden Leiterabschnitte bei Erreichen der Verschleißgrenze der Abstreiferlippe zumindest abschnittsweise frei, so gelangen sie in leitenden Kontakt mit einer angrenzenden Fläche wie beispielsweise einer abzustreifenden Führungsbahn einer Werkzeugmaschine, woraufhin zwischen den beiden Leiterabschnitten ein Signalstrom fließt, der ein Leuchtmittel aufleuchten lassen kann.

Damit die abzustreifende oder abzudichtende Fläche der jeweiligen Werkzeugmaschine durch die Leiterabschnitte nicht zerkratzt werden kann, wenn sie bei Erreichen der Veschleißgrenze die jeweilige Fläche berühren, können die Leiterabschnitte entgegen der Erfindung aus einem weichen Material wie beispielweise Kupfer oder Messing bestehen.

Gemäß einer weiteren nicht erfindungsgemäßen Ausführungsform kann der Stromkreis eine Schnittstelle zum Anschluss und zur Signalübertragung an eine Steuereinrichtung aufweisen. Über eine derartige Schnittstelle kann der Abstreifer beispielsweise an eine entfernte Steuerzentrale angeschlossen werden, um dort einen Maschinenführer über den Verschleißzustand der jeweiligen Maschine unterrichtet zu halten. Der Maschinenführer benötigt somit keinen Sichtkontakt zu der jeweiligen Werkzeugmaschine, da er in der Schaltzentrale über die Schnittstelle der Verschleißwarneinrichtung über den Verschleißzustand der einzelnen Maschinen bzw. deren Abstreiferlippen unterrichtet werden kann. Gleichermaßen kann über die Schnittstelle auch ein Notstopp der jeweiligen Maschine im Verschleißfall bewirkt werden, indem über die Schnittstelle ein entsprechendes Steuersignal an die Steuereinrichtung der Maschine ausgegeben oder ausgelesen wird.

Gemäß einer weiteren nicht erfindungsgemäßen Ausführungsform kann die zumindest eine Signalleitung ein lichtführender Lichtwellenleiter wie beispielsweise ein Glasfaserkabel sein, der bzw. das vorzugsweise entlang der Verschleißgrenze der Abstreiferlippe verläuft. Wird daher die Verschleißgrenze der Abstreiferlippe an irgendeiner Stelle erreicht, so führt dies dazu, dass der Lichtwellenleiter beschädigt oder sogar unterbrochen wird, was zur Folge hat, dass ein durch den Lichtwellenleiter vor dem Erreichen der Verschleißgrenze übertragenes Lichtsignal unterbrochen oder zumindest modifiziert wird, was als Erreichen der Verschleißgrenze gewertet werden kann.

In entsprechender Weise lässt sich gemäß einer weiteren nicht erfindungsgemäßen Ausführungsform auch ein elektrischer Leiter als Signalleitung verwenden, der entlang der Verschleißgrenze der Abstreiferlippe in derselben verläuft. Bei Erreichen der Verschleißgrenze wird ein derart entlang der Verschleißgrenze verlaufender elektrischer Leiter unterbrochen, woraufhin ein bis dahin in dem elektrischen Leiter fließender Signalstrom ebenfalls unterbrochen wird, was ebenfalls dahingehend gewertet werden kann, dass die Verschleißgrenze erreicht ist.

Erfindungsgemäß kann die Flüssigkeitsleitung gemäß einer Ausführungsform beispielsweise Bestandteil eines sogenannten Leuchtstabs sein, wobei die Flüssigkeitsleitung eine Fluidverbindung mit einem sichtbar an der Abstreiferlippe angebrachten Fluidreservoir vorsieht, dass eine Reaktionsflüssigkeit des Leuchtstabs wie beispielsweise einen flüssigen Fluoreszer enthält. So kann die Flüssigkeitsleitung beispielsweise ein freies Ende aufweisen, das die Verschleißgrenze der Abstreiferlippe definiert, so dass im Falle des Erreichens der Verschleißgrenze die Flüssigkeitsleitung einer mechanischen Beanspruchung unterworfen wird, die bewirkt, dass der Leuchtstab aktiviert wird. Beispielsweise kann sich im Inneren der Flüssigkeitsleitung ein mit einer Wasserstoffperoxidlösung gefülltes Glasröhrchen befinden, das aufgrund der mechanischen Beanspruchung der Flüssigkeitsleitung bei Erreichen der Verschleißgrenze der Abstreiferlippe zu Bruch geht, woraufhin die Wasserstoffperoxidlösung freigesetzt wird und die Flüssigkeitsleitung empor bis in das Fluidreservoir steigt. Dort vermischt sich die Wasserstoffperoxidlösung mit dem Fluoreszer und reagiert mit diesem, woraufhin von dem Fluidreservoir und der Flüssigkeitsleitung ein vorzugsweise farbiges Licht als ein für das Erreichen der Verschleißgrenze der Abstreiferlippe repräsentatives Signal emittiert wird.

Gemäß noch einer weiteren Ausführungsform kann die Flüssigkeitsleitung eine Fluidverbindung mit einem mit einer vorzugsweise dunklen Flüssigkeit gefüllten transparenten Reservoir herstellen. Wird in diesem Falle bei Erreichen der Verschleißgrenze der Abstreiferlippe die Flüssigkeitsleitung beschädigt, so kann durch dieselbe bzw. das entstandene Leck die in dem Reservoir befindliche Flüssigkeit austreten, was als Signal dafür gewertet werden kann, dass die Verschleißgrenze der Abstreiferlippe erreicht wurde. Zum einen kann der Maschinenführer durch die austretende Flüssigkeit selbst darauf aufmerksam werden, dass die Verschleißgrenze erreicht wurde. Zusätzlich kann das Reservoir derart farbig hinterlegt sein oder einen Schriftzug wie beispielsweise den Schriftzug "STOP" enthalten, der von der Flüssigkeit in dem Reservoir verdeckt wird, so dass die farbige Hinterlegung und/oder der Schriftzug erst in Erscheinung tritt, wenn bei Erreichen der Verschleißgrenze die Flüssigkeit aus dem Reservoir über die Flüssigkeitsleitung austritt. Dadurch, dass der Schriftzug und/oder die farbige Hinterlegung des Flüssigkeitsreservoirs in Erscheinung tritt, wird dem Maschinenführer somit unmittelbar signalisiert, dass die Verschleißgrenze erreicht wurde und somit der Abstreifer bzw. dessen Abstreiferlippe beizeiten ausgetauscht werden sollte.

Entgegen der Erfindung kann die Signalleitung ein in die Abstreiferlippe verschiebbar eingebetteter Stift oder eine Art Nadel sein, der/die bei Erreichen der Verschleißgrenze sukzessive aus der Abstreiferlippe herausgedrückt wird und somit in Erscheinung tritt. Ist daher der Stift bzw. die Nadel von außen sichtbar, kann darauf geschlossen werden, dass die Verschleißgrenze erreicht wurde.

Gemäß einer weiteren Ausführungsform kann die Abstreiferlippe eine komplexe Geometrie und insbesondere eine polygonale Berandung mit mehreren geraden Lippenabschnitten aufweisen, wobei in jeden Lippenabschnitt ein Abschnitt der Signalleitung eingebettet ist. Selbst wenn daher einzelne Lippenabschnitte der Abstreiferlippe unterschiedlich stark verschleißen sollten, kann dadurch rechtzeitig festgestellt werden, ob einer der Lippenabschnitte seine Verschleißgrenze möglichweise frühzeitig und vor den anderen Lippenabschnitten erreicht hat, so dass dann die gesamte Abstreiferlippe rechtzeitig ausgetauscht werden kann.

Im Folgenden wird die Erfindung nun rein exemplarisch unter Bezugnahme auf die beigefügten Zeichnungen beschrieben, in denen:
- Fig. 1a und 1b: einen nicht erfindungsgemäßen Abstreifer gemäß einer ersten Ausführungsform in einer Ansicht und einer Querschnittsdarstellung zeigen;
- Fig. 2a und 2b: einen nicht erfindungsgemäßen Abstreifer gemäß einer zweiten Ausführungsform in einer Ansicht und in einer Querschnittsdarstellung zeigen; und
- Fig. 3a bis 3d: einen erfindungsgemäßen Abstreifer gemäß einer dritten Ausführungsform in Ansicht und Querschnittsdarstellungen vor und nach dem Erreichen einer Verschleißgrenze zeigen.

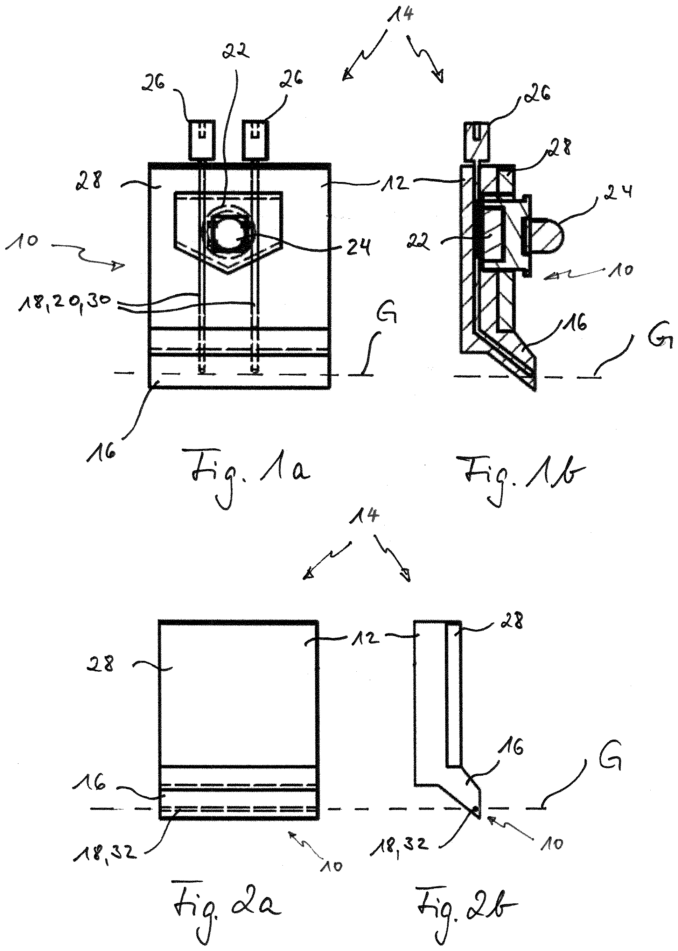

Unter Bezugnahme auf die Fig. 1a und 1b erfolgt zunächst eine Beschreibung einer nicht erfindungsgemäßen Ausführungsform eines Abstreifers 14, bei der als Verschleißwarneinrichtung 10 eine Signalleitung 18 in Form eines elektrischen Leiters 20 mit zwei Leiterabschnitten 30 zum Einsatz kommt. Der Abstreifer 14 umfasst hierbei eine Abstreiferlippe 16, die an einem Träger 28 des Abstreifers 14 befestigt ist. Die Abstreiferlippe 16 sowie der Träger 28 weißen dabei eine im Wesentlichen gerade, d.h. nicht gekrümmte, Längserstreckung auf und erstrecken sich parallel zu einer abzustreifenden Fläche einer hier nicht dargestellten Werkzeugmaschine, die hier der Übersichtlichkeit halber nicht dargestellt ist, wobei Abstreiferlippe 16 an der abzustreifenden Fläche anliegt. Um die abzustreifende Fläche beispielsweise von darauf abgelagerten Fremdkörpern, wie zum Beispiel bei der Bearbeitung von Metallen anfallenden Spänen, oder von sonstigem Schmutz zu befreien, wird der Abstreifer 14 senkrecht zu seiner Längserstreckung linear entlang der abzustreifenden Fläche bewegt. Da die Abstreiferlippe 16 hierbei unter Vorspannung an der abzustreifenden Fläche anliegt, unterliegt die Abstreiferlippe 16 jedoch nicht unerheblichem Verschleiß und muss daher von Zeit zu Zeit ausgewechselt werden. Um den Verschleißzustand der Abstreiferlippe 16 frühzeitig erkennen zu können, weist der Abstreifer die Verschleißwarneinrichtung 10 auf, mittels derer sich der Zeitpunkt feststellen lässt, zu dem die Abstreiferlippe 16 ihre Verschleißgrenze G erreicht hat.

Hierzu sind in die Abstreiferlippe 16, die zum Beispiel aus Nitrilkautschuk (NBR) oder Fluorkautschuk (FPM oder FKM) mittels eines Pressspritz- oder Formpressverfahrens mit oder ohne Stahlträgereinlage oder aber auch aus einem dichtenden Stoff wie beispielsweise Filz gefertigt sein kann, zwei Leiterabschnitte 30 aus beispielsweise Kupfer oder Messing eines Stromkreises derart eingebettet, dass durch ihre freien Enden die Verschleißgrenze G der der Abstreiferlippe 16 definiert wird. Mit anderen Worten liegen die freien Enden der beiden Leiterabschnitte 30 auf Höhe der Verschleißgrenze G der Abstreiferlippe 16. Des Weiteren kann die Abstreiferlippe 16 beispielweise auch anderen Dichtungsmaterialien wie beispielweise PU, Silikon, EPDM oder PTFE gefertigt sein.

Ferner weist die Verschleißwarneinrichtung 10 eine vorzugsweise wiederaufladbare Batterie 22 in Form einer Knopfzelle auf, über die an die beiden Leiterabschnitte 30 ein elektrisches Spannungspotential angelegt wird. Des Weiteren enthält der Stromkreis ein Leuchtmittel in Form einer LED 28, die hier von außen sichtbar in den Träger 28 integriert ist.

In den Fig. 1a und 1b weist die Abstreiferlippe 16 keinen Verschleiß auf, so dass die beiden Leiterabschnitte 30 vollständig in den Abstreiferlippe 16 eingebettet sind. Die beiden Leiterabschnitte 30 sind somit voneinander isoliert, so dass kein Strom durch den durch die Leiterabschnitte 30 gebildeten Stromkreis fließen kann. Wird jedoch die Verschleißgrenze G erreicht, liegen die freien Enden der beiden Leiterabschnitte 30 frei und gelangen somit in Kontakt mit der Fläche, die es mittels des Abstreifers 14 abzustreifen gilt und bei der es sich beispielsweise um eine Führungsbahn einer Werkzeugmaschine handeln kann. Sofern die Führungsbahn elektrisch leitend ist, führt dies dazu, dass der Stromkreis geschlossen wird und somit ein Signalstrom fließt, der zum Aufleuchten der LED 24 führt, was von einem Maschinenführer als ein für den Verschleiß der Abstreiferlippe 16 repräsentatives Signal auch aus der Ferne wahrgenommen werden kann.

Da jedoch nicht immer Sichtkontakt zu der jeweiligen Werkzeugmaschine und insbesondere zu den einzelnen Abstreifern 14 solch einer Werkzeugmaschine besteht, weist der Stromkreis bei der hier dargestellten Ausführungsform eine Schnittstelle in Form zweier Stecker 26 auf, über die die Verschleißwarneinrichtung 10 von einer entfernten Schaltzentrale aus dahingehend überwacht werden kann, ob in dem Stromkreis ein Signalstrom fließt. Über die Schnittstelle in Form der beiden Stecker 26 kann somit der Verschleißzustand des Abstreifers 14 von einer entfernten Schaltzentrale aus überwacht werden. Ferner können Daten über den Verschleißstatus über die in Rede stehende Schnittstelle auch an einen Server oder eine sonstige Datensammelzentrale übertragen werden, von wo aus sie direkt an den Hersteller der Verschleißwarneinrichtung 10 elektronisch übermittelt werden können, um beispielsweise eine baldige Ersatzteillieferungen zu veranlassen.

Zusätzlich oder alternativ hierzu kann über die Schnittstelle eine Anbindung der Verschleißwarneinrichtung 10 an eine Steuereinrichtung der Werkzeugmaschine erfolgen, so dass die Maschine von der Steuereinrichtung unmittelbar abgeschaltet werden kann, sobald die Verschleißgrenze G erreicht ist.

Im Unterschied zu der dargestellten Ausführungsform mit zwei Leiterabschnitten 30, kann in die Abstreiferlippe 16 auch nur ein derartiger Leiterabschnitt 30 eingebettet sein, sofern die abzustreifende Fläche, bei der es sich beispielweise um eine Führungsbahn einer Werkzeugmaschine handeln kann, geerdet ist. Liegt in diesem Falle an dem einen Leiterabschnitt 30 ein elektrisches Potential an, so fließt solange kein Strom durch den Leiterabschnitt 30, wie das freie Ende des Leiterabschnitts 30 vollständig in die Abstreiferlippe 16 eingebettet ist. Sobald jedoch das freie Ende des Leiterabschnitts 30 verschleißbedingt freiliegt und in leitenden Kontakt mit der Führungsbahn der Werkzeugmaschine gelangt, bewirkt das an den Leiterabschnitt 30 angelegte Potential einen Stromfluss durch den Leiterabschnitt 30, der zum Aufleuchten der LED 24 führt, was von einem Maschinenführer als ein für den Verschleiß der Abstreiferlippe 16 repräsentatives Signal auch aus der Ferne wahrgenommen werden kann.

Im Folgenden wird unter Bezugnahme auf die Fig. 2a und 2b eine zweite nicht erfindungsgemäße Ausführungsform eines Abstreifers 14 beschrieben, bei der als Signalleitung 18 ein Lichtwellenleiter 32 zum Einsatz kommt. Bei dem Lichtwellenleiter 32 kann es sich beispielsweise um ein Glasfaserkabel handeln, das parallel bzw. entlang der Verschleißgrenze G verläuft. Auch bei dieser Ausführungsform definiert also wiederum die Signalleitung 18 in Form des Lichtwellenleiters 32 die Verschleißgrenze G.

Wird bei dieser Ausführungsform die Abstreiferlippe 16 verschleißbedingt sukzessive bereichsweise abgetragen, kommt es zu einer Beschädigung oder Unterbrechung des Lichtwellenleiters 32 in diesem Bereich, so dass die Lichtübertragung durch den Lichtwellenleiter 32 unterbrochen oder zumindest modifiziert wird, wenn der Lichtwellenleiter 32 nur äußerlich leicht beschädigt wird, da in diesem Falle die Lichtstrahlen in diesem Bereich anders als zuvor reflektiert werden. Eine derartige Unterbrechung oder Modifikation der Lichtübertragung durch den Lichtwellenleiter 32 kann beispielsweise durch einen Lichtsensor detektiert werden, so dass bei einer Unterbrechung oder Modifikation der Lichtübertragung darauf geschlossen werden kann, dass die Verschleißgrenze G erreicht ist und der Abstreifer 14 bzw. dessen Lippe 16 ausgetauscht werden sollte.

Anstelle bei der unter Bezugnahme auf die Fig. 2a und 2b beschriebenen Ausführungsform einen Lichtwellenleiter 32 parallel bzw. entlang der Verschleißgrenze G eingebettet in dem Abstreifer 14 bzw. dessen Abstreiferlippe 16 vorzusehen, kann in dem Abstreifer 14 bzw. die Abstreiferlippe 16 entlang der Verschleißgrenze G ein elektrischer Leiter eingebettet sein, der solange stromführend ist, wie die Verschließgrenze G nicht erreicht ist. Wird jedoch die Verschließgrenze G erreicht und dabei der elektrische Leiter beschädigt, wird der Stromfluss unterbrochen, woraus geschlossen werden kann, dass die Verschleißgrenze G erreicht wurde.

Darüber hinaus kann es gemäß einer weiteren Ausführungsform vorgesehen sein, einen Lichtwellenleiter mit einem freien Ende derart in den Abstreifer 14 einzubetten, dass bei Erreichen der Verschleißgrenze G des Abstreifers 14 das freie Ende des Lichtwellenleiters freiliegt. In den Lichtwellenleiter eingespeistes Licht tritt somit solange aus dem freien Ende des Lichtwellenleiters nicht aus, wie die Verschleißgrenze G nicht erreicht ist. Sobald jedoch die Verschleißgrenze G erreicht wird, tritt das in den Lichtwellenleiter eingespeiste Licht am freien Ende desselben aus, was wiederum beispielsweise mittels eines Lichtsensors detektiert werden kann, um darauf zu schließen, dass der Abstreifer verschlissen ist.

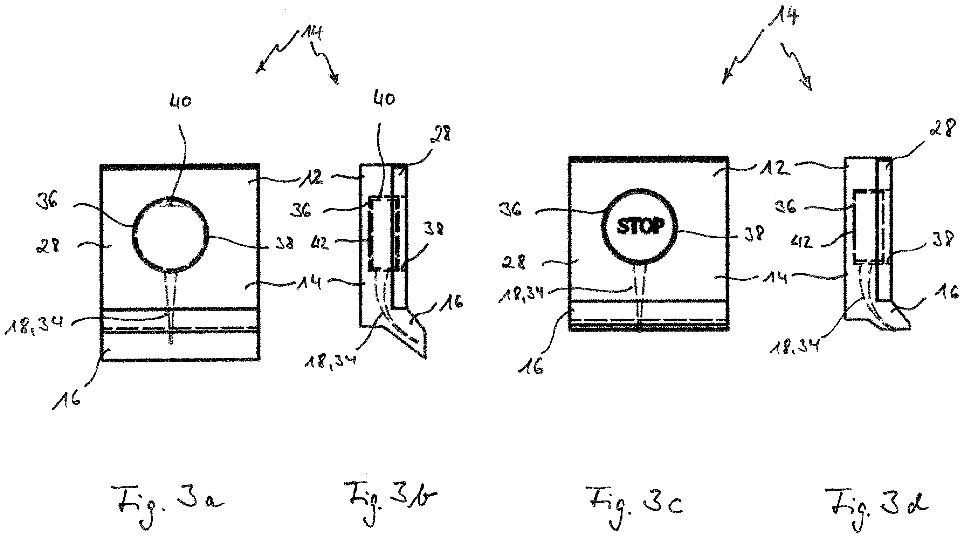

Im Folgenden wird nun unter Bezugnahme auf die Fig. 3a bis 3d eine erfindungsgemäße Ausführungsform eines Abstreifers 14 beschrieben, bei der als Signalleitung 18 eine Flüssigkeitsleitung 34 zum Einsatz kommt. Wie den Fig. 3a bis 3d entnommen werden kann, weist die in die Abstreiferlippe 16 eingebettete Flüssigkeitsleitung 34 ein freies Ende auf, durch das die Verschleißgrenze G definiert wird. An ihrem gegenüberliegenden Ende mündet die Flüssigkeitsleitung 34 in ein durchsichtiges Reservoir 36, das ebenfalls in den Abstreifer 14 teilweise eingebettet und durch ein Sichtfenster 38 in dem Träger 28 von außen sichtbar ist. Das Reservoir 36 und die Flüssigkeitsleitung 34 sind mit einer vorzugsweise dunkel gefärbten Flüssigkeit 40 gefüllt, durch die ein "STOP"-Schriftzug verdeckt wird, der an einer dem Sichtfenster 38 gegenüberliegenden Rückwand 42 des Reservoirs 36 vorgesehen ist.

In den Fig. 3a und 3b ist die Verschleißgrenze G des Abstreifers 14 noch nicht erreicht. Das freie Ende der Flüssigkeitsleitung 34 ist somit vollständig in die Abstreiferlippe 16 eingebettet, so dass aus dem freien Ende der Flüssigkeitsleitung 34 keine Flüssigkeit 40 austreten kann. Wird jedoch die Abstreiferlippe 16 des Abstreifers 14 verschleißbedingt sukzessive abgetragen, so liegt das freie Ende der Flüssigkeitsleitung 34 gemäß den Fig. 3c und 3d frei, sobald die Verschleißgrenze G erreicht ist. Da die Flüssigkeitsleitung 34 mit dem Reservoir 36 in Fluidverbindung steht, kann somit in dem Reservoir 36 befindliche Flüssigkeit 40 durch das freie Ende der Flüssigkeitsleitung 34 austreten, so dass der Flüssigkeitsspiegel in dem Reservoir 36 mit der Folge absinkt, dass der "STOP"-Schriftzug sichtbar wird. Ein Maschinenführer wird somit durch das Aufscheinen des "STOP"-Schriftzugs darüber informiert, dass der Abstreifer 14 verschlissen ist und ausgetauscht werden sollte.

Zusätzlich oder alternativ zu dem "STOP"-Schriftzug kann die Rückwand 42 des Reservoirs auch farbig, beispielsweise in der Farbe Rot ausgebildet sein, um das Erreichen der Verschleißgrenze noch besser sichtbar zu machen.

### Bezugszeichenliste

- 10: Verschleißwarneinrichtung
- 14: Abstreifer
- 16: Abstreiferlippe
- 18: Signalleitung
- 20: elektrische Leiter
- 22: Batterie/Knopfzelle
- 24: LED
- 26: Stecker/Schnittstelle
- 28: Träger
- 30: Leiterabschnitte
- 32: Lichtwellenleiter
- 34: Flüssigkeitsleitung
- 36: Reservoir
- 38: Sichtfenster
- 40: Flüssigkeit
- 42: Rückwand

- G: Verschleißgrenze

## Patentansprüche

1. Abstreifer (14) zum Abstreifen einer Oberfläche einer Werkzeugmaschine, umfassend:
- eine verschleißbehaftete Abstreiferlippe (16) zum Abstreifen der Oberfläche der Werkzeugmaschine, wobei die Abstreiferlippe (16) eine Verschleißgrenze (G) definiert; und
- zumindest eine Signalleitung (18);
wobei die zumindest eine Signalleitung (18) derart in die Abstreiferlippe (16) eingebettet ist, dass bei Erreichen der Verschleißgrenze (G) der Abstreiferlippe (16) zumindest ein Abschnitt der Signalleitung (18) frei liegt;
**dadurch gekennzeichnet, dass**
die zumindest eine Signalleitung (18) eine Flüssigkeitsleitung (34) ist.

2. Abstreifer (14) nach Anspruch 1,
**dadurch gekennzeichnet, dass**
die Flüssigkeitsleitung (34) eine Fluidverbindung mit einem mit einer Flüssigkeit gefüllten Reservoir (36) herstellt, das vorzugsweise transparent ist.

3. Abstreifer (14) nach Anspruch 1,
**dadurch gekennzeichnet, dass**
die Flüssigkeitsleitung (34) Bestandteil eines Leuchtstabs ist, wobei die Flüssigkeitsleitung (34) eine Fluidverbindung mit einem sichtbar an der Abstreiferlippe (16) angebrachten Fluidreservoir (36) vorsieht, das eine Reaktionsflüssigkeit des Leuchtstabs enthält, insbesondere einen flüssigen Fluoreszer.

4. Abstreifer (14) nach zumindest einem der vorstehenden Ansprüche, **dadurch gekennzeichnet, dass**
die Signalleitung (18) die Verschleißgrenze (G) der Abstreiferlippe (16) definiert, wozu insbesondere:
- die Signalleitung (18) ein freies Ende aufweist, das die Verschleißgrenze (G) definiert; oder
- die Signalleitung (18) parallel zu der Verschleißgrenze verläuft.

5. Abstreifer (14) nach zumindest einem der vorstehenden Ansprüche, **dadurch gekennzeichnet, dass** die Abstreiferlippe (16) eine komplexe Geometrie und insbesondere eine polygonale Berandung mit mehreren geraden Lippenabschnitten aufweist, wobei in jeden Lippenabschnitt ein Abschnitt der Signalleitung (18) eingebettet ist.

## Claims

1. A way wiper (14) for wiping a surface of a machine tool comprising:
- a way wiper lip (16) subject to wear for wiping the surface of the machine tool, wherein the way wiper lip (16) defines a wear limit (G); and
- at least one signal line (18),
wherein the at least one signal line (18) is embedded in the way wiper lip (16) such that at least one section of the signal line (18) is exposed on reaching the wear limit (G) of the way wiper lip (16),
**characterized in that**
the at least one signal line (18) is a fluid line (34).

2. A way wiper (14) in accordance with claim 1,
**characterized in that**
the fluid line (34) establishes fluid communication with a reservoir (36) which is filled with fluid and which is preferably transparent.

3. A way wiper (14) in accordance with claim 1,
**characterized in that**
the fluid line (34) is a component of a glow stick, with the fluid line (34) providing fluid communication with a fluid reservoir (36) which is visibly attached to the way wiper lip (16) and which contains a reaction fluid of the glow stick, in particular a liquid fluorescer.

4. A way wiper (14) in accordance with at least one of the preceding claims, **characterized in that**
the signal line (18) defines the wear limit (G) of the way wiper lip (16), for which purpose, in particular:
- the signal line (18) has a free end which defines the wear limit (G); or
- the signal line (18) extends in parallel with the wear limit.

5. A way wiper (14) in accordance with at least one of the preceding claims, **characterized in that**
the way wiper lip (16) has a complex geometry and in particular has a polygonal boundary having a plurality of straight lip sections, with a section of the signal line (18) being embedded in each lip section.

## Revendications

1. Racleur (14) pour racler une surface d'une machine-outil, comprenant :
- une lèvre de raclage (16), soumise à l'usure, destinée à racler la surface de la machine-outil, la lèvre de raclage (16) définissant une limite d'usure (G) ; et
- au moins une ligne de signalisation (18) ;
ladite au moins une ligne de signalisation (18) étant encastrée dans la lèvre de raclage (16) de telle sorte que, lorsque la limite d'usure (G) de la lèvre de raclage (16) est atteinte, au moins un tronçon de la ligne de signalisation (18) est à découvert ;
**caractérisé en ce que**
ladite au moins une ligne de signalisation (18) est un conduit de liquide (34).

2. Racleur (14) selon la revendication 1,
**caractérisé en ce que**
le conduit de liquide (34) établit une communication fluidique avec un réservoir (36), rempli d'un liquide, qui est de préférence transparent.

3. Racleur (14) selon la revendication 1,
**caractérisé en ce que**
le conduit de liquide (34) fait partie d'un bâton lumineux, le conduit de liquide (34) prévoyant une communication fluidique avec un réservoir de fluide (36) monté de manière visible sur la lèvre de raclage (16) et contenant un liquide de réaction du bâton lumineux, en particulier un fluorescent liquide.

4. Racleur (14) selon l'une au moins des revendications précédentes, **caractérisé en ce que**
la ligne de signalisation (18) définit la limite d'usure (G) de la lèvre de raclage (16), moyennant quoi, en particulier :
- la ligne de signalisation (18) présente une extrémité libre qui définit la limite d'usure (G) ; ou
- la ligne de signalisation (18) s'étend parallèlement à la limite d'usure.

5. Racleur (14) selon l'une au moins des revendications précédentes, **caractérisé en ce que**
la lèvre de raclage (16) présente une géométrie complexe et en particulier un bord polygonal avec plusieurs tronçons de lèvre droits, un tronçon de la ligne de signalisation (18) étant encastré dans chaque tronçon de lèvre.
